# EUROPEAN PATENT APPLICATION

(11) **EP 4 518 424 A1**
(43) Date of publication of application: **05.03.2025**
(21) Application number: 22939035.6
(22) Date of filing: 27.04.2022
(51) Int. Cl.: H04W 36/00

(54) **LOCATION INFORMATION RECORDING METHOD AND APPARATUS FOR SUCCESSFUL PSCELL ADDITION OR REPLACEMENT REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Hersina, Günter
(86) International application number: PCT/CN2022/089681
(87) International publication number: WO 2023/206182

(57) **Abstract**

The present disclosure belongs to the technical field of communications. Provided are a location information recording method and apparatus for a successful PSCell addition or replacement report, and a device and a storage medium. The method comprises: in response to triggering a successful PSCell addition or replacement report, recording location information of a terminal device. The present disclosure provides a processing method for the situation of "temporarily not supporting a location information record of a successful PScell addition or replacement", so as to provide additional confirmation opportunities, thereby ensuring the success rate of PSCell addition or replacement.

## Description

### TECHNICAL FIELD

The disclosure relates to the field of communication technologies, more particularly to a method, an apparatus and a device for recording location information for a report of successful primary secondary cell (PSCell) addition or change, and a storage medium.

### BACKGROUND

In a communication system, a network device may configure a trigger condition of PSCell addition or change to a terminal, and the terminal may add or change a PSCell when meeting a condition.

It is not supported temporarily that location information is recorded when a report of successful PSCell addition or change is determined after the PSCell addition or change is performed. Therefore, it is caused that the location information is not recorded in case the PSCell addition or change fails, or that the report of successful PSCell addition or change is determined, thus affecting a subsequent transmission service, such as dropped calls. Therefore, there is an urgent need for a method of "recording the location information for successful PScell addition or change", to provide an additional confirmation opportunity and to ensure a success rate of the PSCell addition or change.

### SUMMARY

The disclosure provides a method, an apparatus and a device for recording location information for a report of successful primary secondary cell (PScell) addition or change, and a storage medium, to provide an additional confirmation opportunity and to ensure a success rate of the PAC.

One aspect of embodiments of the disclosure provides a method for recording location information for a report of successful PScell addition or change, performed by a terminal. The method includes:
recording location information of the terminal in response to triggering the report of successful PAC.

Alternatively, in an embodiment of the disclosure, recording the location information of the terminal includes:
recording available location information in case there is the available location information in the terminal.

Alternatively, in an embodiment of the disclosure, recording the location information of the terminal in response to triggering the report of successful PAC includes:
receiving a radio resource control (RRC) reconfiguration message sent by a network device for the report of successful PAC;
determining whether the RRC reconfiguration message carries indication information of the location information after triggering the report of successful PAC in response to the RRC reconfiguration message;
determining whether there is available location information in the terminal in response to the RRC reconfiguration message carrying the indication information of the location information; and
recording the available location information in response to there being the available location information in the terminal.

Alternatively, in an embodiment of the disclosure, recording the location information of the terminal includes:
receiving measurement configuration information sent by a network device; and
recording the location information of the terminal in response to the measurement configuration information including indication information for location measurement. The indication information for location measurement includes at least one of: includeCommonLocationInfo, includeBT-Meas, includeWLAN-Meas, or includeSensor-Meas.

Alternatively, in an embodiment of the disclosure, the measurement configuration information is a reportConfigToAddModList in a MeasConfig.

Alternatively, in an embodiment of the disclosure, recording the location information of the terminal includes:
receiving an RRC reconfiguration message sent by a network device; and
recording the location information of the terminal in response to OtherConfig in the RRC reconfiguration message indicating an obtainCommonLocation.

Alternatively, in an embodiment of the disclosure, recording the location information of the terminal includes:
obtaining global navigation satellite system (GNSS) location information in case there is no available GNSS location information in the terminal; and
recording the GNSS location information as the location information of the terminal.

Alternatively, in an embodiment of the disclosure, recording the location information of the terminal includes:
in case the terminal obtains a user consent, obtaining the location information of the terminal based on the user consent; and
recording the location information of the terminal.

Another aspect of embodiments of the disclosure provides a method for recording location information for a report of successful primary secondary cell (PScell) addition or change (PAC), performed by a network device. The method includes:
receiving location information sent by a terminal.

Alternatively, in an embodiment of the disclosure, before receiving the location information sent by the terminal, the method further includes:
obtaining a user consent based on a user-defined feature (UDF) in a core network; and
sending a radio resource control (RRC) reconfiguration message for the report of successful PAC to the terminal in response to the user consent, in which the RRC reconfiguration message carries indication information of the location information.

Alternatively, in an embodiment of the disclosure, before receiving the location information sent by the terminal, the method further includes:
sending measurement configuration information to the terminal, in which the measurement configuration information includes indication information for location measurement, and the indication information for location measurement includes at least one of: includeCommonLocationInfo, includeBT-Meas, includeWLAN-Meas, or includeSensor-Meas.

Alternatively, in an embodiment of the disclosure, before receiving the location information sent by the terminal, the method further includes:
sending an RRC reconfiguration message for the report of successful PAC to the terminal, in which OtherConfig in the RRC reconfiguration message carries an obtainCommonLocation.

Another aspect of embodiments of the disclosure provides an apparatus for recording location information for a report of successful primary secondary cell (PScell) addition or change (PAC), including:
a record module, configured to record location information of a terminal in response to triggering the report of successful PAC.

Another aspect of embodiments of the disclosure provides an apparatus for recording location information for a report of successful primary secondary cell (PScell) addition or change (PAC), including:
a receiving module, configured to receive location information sent by a terminal.

Another aspect of embodiments of the disclosure provides a communication device, including a processor and a memory. The memory has a computer program stored thereon, and the processor is configured to execute the computer program stored in the memory, to cause the communication device to execute the above method according to the one aspect of embodiments.

Another aspect of embodiments of the disclosure provides a communication device, including a processor and a memory. The memory has a computer program stored thereon, and the processor is configured to execute the computer program stored in the memory, to cause the communication device to execute the above method according to another aspect of embodiments.

Another aspect of embodiments of the disclosure provides a communication device, including: a processor and an interface circuit.

The interface circuit is configured to receive code instructions and to transmit the code instructions to the processor.

The processor is configured to execute the code instructions, to execute the method according to the one aspect of embodiments.

Another aspect of embodiments of the disclosure provides a communication device, including: a processor and an interface circuit.

The interface circuit is configured to receive code instructions and to transmit the code instructions to the processor.

The processor is configured to execute the code instructions, to execute the method according to another aspect of embodiments.

Another aspect of embodiments of the disclosure provides a computer-readable storage medium, configured to store instructions. When the instructions are executed, the method according to the one aspect of embodiments is realized.

Another aspect of embodiments of the disclosure provides a computer-readable storage medium, configured to store instructions. When the instructions are executed, the method according to another aspect of embodiments is realized.

In conclusion, in embodiments of the disclosure, the terminal may record the location information of the terminal in response to triggering the report of successful PAC. In embodiments of the disclosure, the terminal records the location information of the terminal, thus recording the location information of the terminal when the report of successful PAC is determined, and further confirming the report of successful PAC. The disclosure provides a processing method for a situation where "recording the location information for successful PAC is not supported temporarily", to provide an additional confirmation opportunity and to ensure a success rate of the PAC.

### BRIEF DESCRIPTION OF THE DRAWINGS

The above and/or additional aspects and advantages of the disclosure will be apparent and easily understood from following description of embodiments in combination with the accompanying drawings, in which:
FIG. 1 is a flow chart illustrating a method for recording location information for a report of successful PScell addition or change according to an embodiment of the disclosure;
FIG. 2 is a flow chart illustrating a method for recording location information for a report of successful PScell addition or change according to another embodiment of the disclosure;
FIG. 3 is a flow chart illustrating a method for recording location information for a report of successful PScell addition or change according to another embodiment of the disclosure;
FIG. 4 is a flow chart illustrating a method for recording location information for a report of successful PScell addition or change according to another embodiment of the disclosure;
FIG. 5 is a flow chart illustrating a method for recording location information for a report of successful PScell addition or change according to another embodiment of the disclosure;
FIG. 6 is a flow chart illustrating a method for recording location information for a report of successful PScell addition or change according to another embodiment of the disclosure;
FIG. 7 is a flow chart illustrating a method for recording location information for a report of successful PScell addition or change according to another embodiment of the disclosure;
FIG. 8 is a flow chart illustrating a method for recording location information for a report of successful PScell addition or change according to another embodiment of the disclosure;
FIG. 9 is a flow chart illustrating a method for recording location information for a report of successful PScell addition or change according to another embodiment of the disclosure;
FIG. 10 is a flow chart illustrating a method for recording location information for a report of successful PScell addition or change according to another embodiment of the disclosure;
FIG. 11 is a block diagram illustrating an apparatus for recording location information for a report of successful PScell addition or change according to an embodiment of the disclosure;
FIG. 12 is a block diagram illustrating an apparatus for recording location information for a report of successful PScell addition or change according to another embodiment of the disclosure;
FIG. 13 is a block diagram illustrating a terminal according to an embodiment of the disclosure; and
FIG. 14 is a block diagram illustrating a network device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the embodiments of the disclosure as detailed in the appended claims.

Terms described in the embodiments of the disclosure are only for the purpose of describing specific embodiments, but should not be construed to limit the embodiments of the disclosure. As used in the embodiments of the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, such information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

Detailed description is made below to a method, an apparatus and a device for recording location information for a report of successful primary secondary cell (PScell) addition or change, and a storage medium according to embodiments of the disclosure with reference to accompanying drawings.

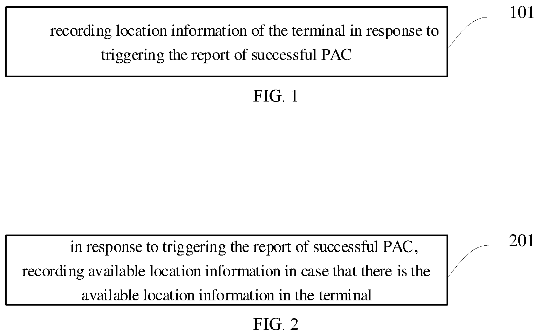

FIG. 1 is a flow chart illustrating a method for recording location information for a report of successful PScell addition or change (PAC) according to an embodiment of the disclosure. The method is performed by a terminal. As illustrated in FIG. 1, the method may include the following.

At block 101, location information of the terminal is recorded in response to triggering the report of successful PAC.

It should be noted that, in an embodiment of the disclosure, the terminal may be a device that provides speech and/or data connectivity to a user. The terminal may communicate with one or more core networks via a radio access network (RAN). The terminal may be an Internet of Things terminal, such as a sensor device, a mobile phone (or referred to as a "cellular" phone) and a computer with an Internet of Things terminal. For example, the terminal may be a fixed, portable, pocket-sized, handheld, built-in computer or vehicle-mounted apparatus, such as, a station (STA), a subscriber unit, a subscriber station, a mobile station, a mobile, a remote station, an access point, a remote terminal, an access terminal, a user terminal, a user agent or the like. Alternatively, the terminal may be a device of an unmanned aerial vehicle. Alternatively, the terminal may be a vehicle-mounted device, such as, a driving computer with a wireless communication function, or a wireless communication device externally connected with a driving computer. Alternatively, the terminal may be a roadside device, such as a street lamp, a signal lamp or the like with the wireless communication function.

In an embodiment of the disclosure, recording the location information of the terminal by the terminal may be that the terminal records available location information in case there is the available location information in the terminal.

In an embodiment of the disclosure, recording the location information of the terminal by the terminal in response to triggering the report of successful PAC may be that the terminal receives a radio resource control (RRC) reconfiguration message sent by a network device for the report of successful PAC, determines whether the RRC reconfiguration message carries indication information of the location information after triggering the report of successful PAC in response to the RRC reconfiguration message; determines whether there is the available location information in the terminal in response to the RRC reconfiguration message carrying the indication information of the location information; and records the available location information in response to there being the available location information in the terminal.

In an embodiment of the disclosure, the terminal may trigger the report of successful PAC. PAC may include one or more of: conditional PScell addition (CPA); conditional PScell change (CPC); conditional PScell addition/change (CPAC). In addition, the network device may directly configure PAC other than the CPAC.

In an embodiment of the disclosure, recording the location information of the terminal by the terminal may be that the terminal receives measurement configuration information sent by the network device; and records the location information of the terminal in response to the measurement configuration information including indication information for location measurement. The indication information for location measurement includes at least one of: including common location information (includeCommonLocationInfo), including bluetooth measurement information (includeBT-Meas), including wireless local area network (WLAN) measurement information (includeWLAN-Meas), or including sensor measurement information (includeSensor-Meas).

In an embodiment of the disclosure, the measurement configuration information is an addition/modification list subjected to reporting configuration (reportConfigToAddModList) in a measurement configuration information element (MeasConfig).

Further, in an embodiment of the present disclosure, recording the location information of the terminal by the terminal may be receiving the RRC reconfiguration message sent by the network device; and recording the location information of the terminal in response to other configuration (OtherConfig) in the RRC reconfiguration message indicating an obtaining common location (obtainCommonLocation).

In an embodiment of the disclosure, recording the location information of the terminal by the terminal may be obtaining global navigation satellite system (GNSS) location information in case there is no available GNSS location information in the terminal; and recording the GNSS location information and taking the GNSS location information as the location information of the terminal.

For example, in an embodiment of the disclosure, recording the location information of the terminal by the terminal may be: in case the terminal obtains a user consent, obtaining the location information of the terminal based on the user consent; and recording the location information of the terminal.

In an embodiment of the disclosure, a data type of the location information is LocationInfo.

In conclusion, in an embodiment of the disclosure, the terminal may record the location information of the terminal in response to triggering the report of successful PAC. In an embodiment of the disclosure, the terminal records the location information of the terminal, thus recording the location information of the terminal when the report of the successful PAC is determined, and further confirming successful PAC. The disclosure provides a processing method for a situation where "recording the location information for successful PAC is not supported temporarily", to provide an additional confirmation opportunity and to ensure a success rate of the PAC.

It should be noted that, the method for recording the location information for a report of successful PAC according to the following embodiment may be distinguished in a new radio (NR) network and an evolved universal mobile telecommunication system (UMTS) terrestrial radio access (EUTRA) network, and may report the report of successful PAC in the NR network and the EUTRA network respectively.

FIG. 2 is a flow chart illustrating a method for recording location information for a report of successful PAC according to an embodiment of the disclosure. The method is performed by the terminal. As illustrated in FIG. 2, the method may include the following.

At block 201, in response to triggering the report of successful PAC, in case there is available location information in the terminal, the available location information is recorded.

In an embodiment of the disclosure, the terminal may determine whether there is the available location information in the terminal in response to triggering the report of successful PAC. In case the terminal determines that there is the available location information in the terminal, the terminal records the available location information. The available location information is taken as the location information of the terminal.

In conclusion, in embodiments of the disclosure, the terminal may record the location information of the terminal in response to triggering the report of successful PAC. In embodiments of the disclosure, the terminal records the available location information of the terminal when confirming that there is the available location information in the terminal, thus recording the location information of the terminal when the report of successful PAC is determined, and further confirming the report of successful PAC. In embodiments of the disclosure, the terminal may record the location information of the terminal in different record ways. The disclosure provides a processing method for a situation where "recording the location information for successful PAC is not supported temporarily", to provide an additional confirmation opportunity and to ensure a success rate of the PAC.

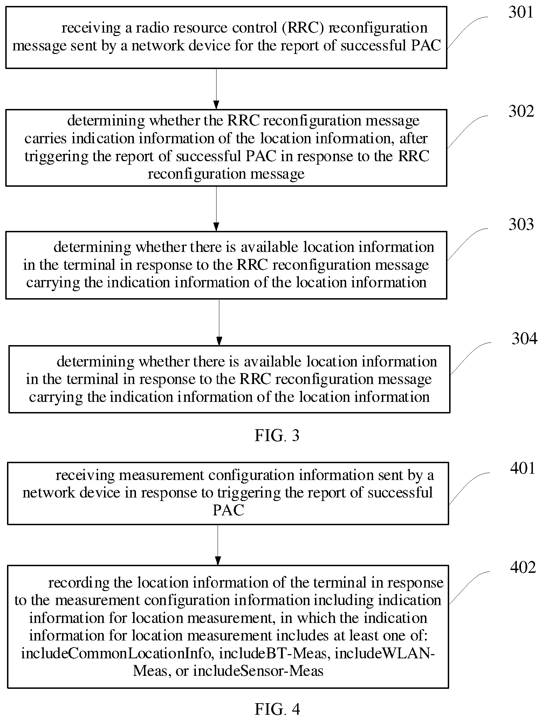

FIG. 3 is a flow chart illustrating a method for recording location information for a report of successful PAC according to an embodiment of the disclosure. The method is performed by the terminal. As illustrated in FIG. 3, the method may include the following.

At block 301, a radio resource control (RRC) reconfiguration message sent by the network device for the report of successful PAC is received.

At block 302, it is determined whether the RRC reconfiguration message carries indication information of the location information after triggering the report of successful PAC in response to the RRC reconfiguration message.

At block 303, it is determined whether there is available location information in the terminal in response to the RRC reconfiguration message carrying the indication information of the location information.

At block 304, the available location information is recorded in response to there being the available location information in the terminal.

It should be noted that, in an embodiment of the disclosure, an RRC reconfiguration message is configured to indicate the PAC. The terminal may initiate the PAC, and determine the report of successful PAC.

In an embodiment of the disclosure, for a multi-radio dual connectivity (MR-DC), the network device may add or change a PSCell by the RRC reconfiguration message. The MR-DC includes a long term evolution (LTE)-new radio (NR) dual connectivity (DC), an NR-LTE DC, an NR-NR DC and an LTE-LTE DC.

For example, in an embodiment of the disclosure, after the terminal initiates the PAC, the terminal determines the report of successful PAC in case the terminal determines success of the PAC.

For example, before the network device configures the RRC reconfiguration message for the report of successful PAC, the network device may obtain a user consent. The user consent may be a user-defined feature (UPF) from a core network.

In conclusion, in an embodiment of the disclosure, the terminal may record the location information of the terminal in response to triggering the report of successful PAC. In embodiments of the disclosure, the terminal executes an operation of recording the location information of the terminal by determining whether the RRC reconfiguration message carries the indication information of the location information, thus recording the location information of the terminal when the report of successful PAC is determined, and further confirming successful PAC. In embodiments of the disclosure, the terminal may record the location information of the terminal in different record ways. The disclosure provides a processing method for the situation where "recording the location information for successful PAC is not supported temporarily", to provide an additional confirmation opportunity and to ensure a success rate of the PAC.

FIG. 4 is a flow chart illustrating a method for recording location information for a report of successful PAC according to an embodiment of the disclosure. The method is performed by the terminal. As illustrated in FIG. 4, the method may include the following.

At block 401, measurement configuration information sent by the network device is received in response to triggering the report of successful PAC.

In an embodiment of the disclosure, the measurement configuration information is a reportConfigToAddModList in a MeasConfig.

At block 402, the location information of the terminal is recorded in response to the measurement configuration information including indication information for location measurement, in which the indication information for location measurement includes at least one of: includeCommonLocationInfo, includeBT-Meas, includeWLAN-Meas, or includeSensor-Meas.

For example, in an embodiment of the disclosure, the indication information for location measurement includes one or more of: the includeCommonLocationInfo, the includeBT-Meas, the includeWLAN-Meas, or the includeSensor-Meas.

For example, in an embodiment of the disclosure, the report of successful PAC and an immediate minimization of drive-test (MDT) multiplex the same user consent.

In conclusion, in embodiments of the disclosure, the terminal may record the location information of the terminal in response to triggering the report of successful PAC. In embodiments of the disclosure, the terminal records the location information of the terminal in case the measurement configuration information sent by the network device includes the indication information for location measurement, thus recording the location information of the terminal when the report of successful PAC is determined, and further confirming successful PAC. In embodiments of the disclosure, the terminal may record the location information of the terminal in different record ways. The disclosure provides a processing method for the situation where "recording the location information for successful PAC is not supported temporarily", to provide an additional confirmation opportunity and to ensure a success rate of the PAC.

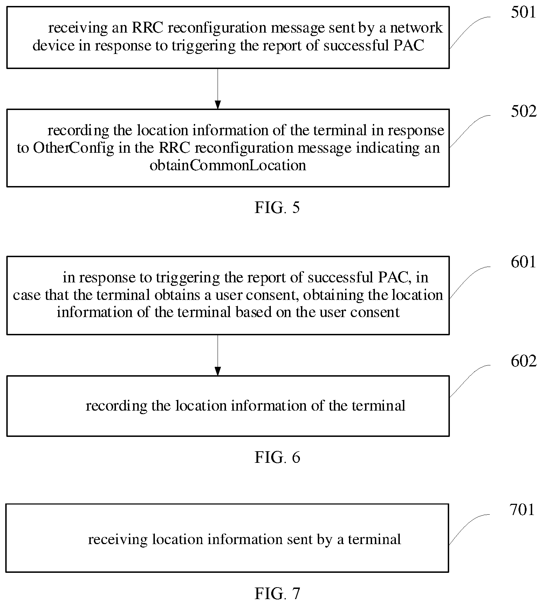

FIG. 5 is a flow chart illustrating a method for recording location information for a report of successful PAC according to an embodiment of the disclosure. The method is performed by the terminal. As illustrated in FIG. 5, the method may include the following.

At block 501, an RRC reconfiguration message sent by the network device is received in response to triggering the report of successful PAC.

At block 502, the location information of the terminal is recorded in response to OtherConfig in the RRC reconfiguration message indicating an obtainCommonLocation.

In an embodiment of the disclosure, a message carrying location of the OtherConfig in the RRC reconfiguration message is different from a message carrying location of the indication information of the location information in the RRC reconfiguration message.

For example, in an embodiment of the disclosure, when the terminal receives the RRC reconfiguration message sent by the network device, the terminal may decide whether to record the location information of the terminal based on determining whether the obtainCommonLocation is carried in the OtherConfig in the RRC reconfiguration message. The terminal records the location information of the terminal in response to there being the obtainCommonLocation indicated in the OtherConfig in the RRC reconfiguration message.

For example, in an embodiment of the disclosure, when the terminal records the location information of the terminal, the terminal may determine whether there is available global navigation satellite system (GNSS) location information in the terminal. In case there is no available GNSS location information in the terminal, the terminal obtains GNSS location information. The terminal records the GNSS location information, and takes the GNSS location information as the location information of the terminal.

In conclusion, in embodiments of the disclosure, the terminal may record the location information of the terminal in response to triggering the report of successful PAC. In embodiments of the disclosure, the terminal records the location information of the terminal in response to the OtherConfig in the RRC reconfiguration message sent by the network device indicating the obtainCommonLocation, thus recording the location information of the terminal when the report of successful PAC is determined, and further confirming successful PAC. In embodiments of the disclosure, the terminal may record the location information of the terminal in different record ways. The disclosure provides a processing method for the situation where "recording the location information for successful PAC is not supported temporarily", to provide an additional confirmation opportunity and to ensure a success rate of the PAC.

FIG. 6 is a flow chart illustrating a method for recording location information for a report of successful PAC according to an embodiment of the disclosure. The method is performed by the terminal. As illustrated in FIG. 6, the method may include the following.

At block 601, in response to triggering the report of successful PAC, in case the terminal obtains a user consent, the location information of the terminal is obtained based on the user consent.

At block 602, the location information of the terminal is recorded.

Obtaining the user consent by the terminal may be obtaining the user consent from the terminal itself, and not obtaining the user consent sent by the network device.

For example, in an embodiment of the disclosure, the terminal may determine whether to obtain the location information of the terminal by a flag bit in the user consent. For example, in case the terminal determines that the flag bit in the user consent indicates recording the location information, the terminal may obtain the location information of the terminal and record the location information of the terminal.

In conclusion, in embodiments of the disclosure, the terminal may record the location information of the terminal in response to triggering the report of successful PAC. In embodiments of the disclosure, the terminal obtains the location information of the terminal based on the user consent, thus recording the location information of the terminal when the report of successful PAC is determined, and further confirming the successful PAC. In embodiments of the disclosure, the terminal may record the location information of the terminal in different record ways. The disclosure provides a processing method for the situation where "recording the location information for successful PAC is not supported temporarily", to provide an additional confirmation opportunity and to ensure a success rate of the PAC.

FIG. 7 is a flow chart illustrating a method for recording location information for a report of successful PScell addition or change according to an embodiment of the disclosure. The method is performed by a network device. As illustrated in FIG. 7, the method may include the following.

At block 701, location information sent by a terminal is received.

In an embodiment of the disclosure, before receiving the location information sent by the terminal, the method further includes:
obtaining a user consent based on a user-defined feature (UDF) in a core network; and
sending an RRC reconfiguration message for the report of successful PAC to the terminal in response to the user consent, in which the RRC reconfiguration message carries indication information of the location information.

In an embodiment of the disclosure, before receiving the location information sent by the terminal, the method further includes:
sending measurement configuration information to the terminal, in which the measurement configuration information includes indication information for location measurement, and the indication information for location measurement includes at least one of: includeCommonLocationInfo, includeBT-Meas, includeWLAN-Meas, or includeSensor-Meas.

In an embodiment of the disclosure, before receiving the location information sent by the terminal, the method further includes:
sending an RRC reconfiguration message for the report of successful PAC to the terminal, in which OtherConfig in the RRC reconfiguration message carries an obtainCommonLocation.

In conclusion, in the method for recording the location information for the report of successful PAC according to embodiments of the disclosure, the terminal may send the location information to the network device after recording the location information of the terminal. In embodiments of the disclosure, the network device may receive the location information of the terminal sent by the terminal, and confirm whether the PAC successes. The disclosure provides a processing method for the situation where "recording the location information for successful PAC is not supported temporarily", to provide an additional confirmation opportunity and to ensure a success rate of the PAC.

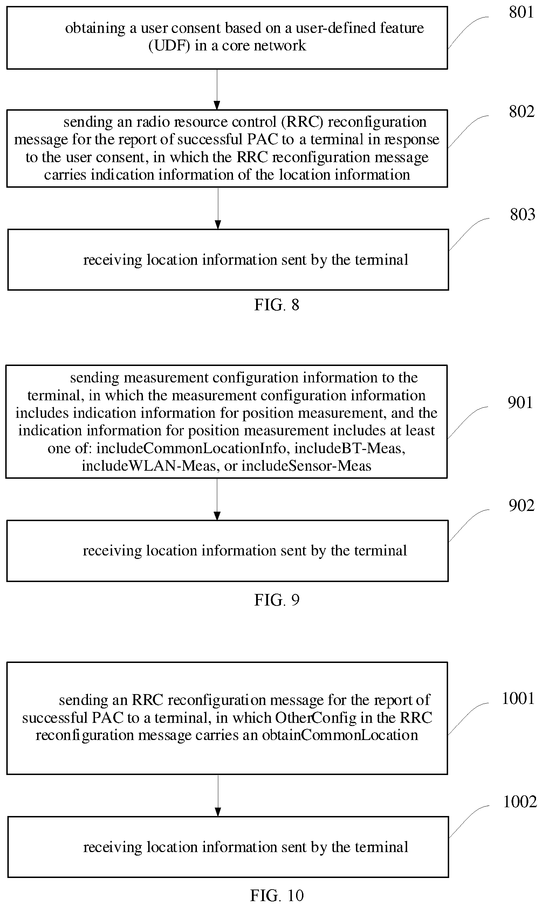

FIG. 8 is a flow chart illustrating a method for recording location information for a report of successful PScell addition or change according to an embodiment of the disclosure. The method is performed by the network device. As illustrated in FIG. 8, the method may include the following.

At block 801, a user consent is obtained based on a user-defined feature (UDF) in a core network.

At block 802, an RRC reconfiguration message for the report of successful PAC is sent to the terminal in response to the user consent, in which the RRC reconfiguration message carries indication information of the location information.

At block 803, the location information sent by a terminal is received

In an embodiment of the disclosure, both NR/LTE support PAC based on a condition. The network device may configure a trigger event of the RRC reconfiguration message. Up to two trigger events may be configured. The network device may send the RRC reconfiguration message to the terminal. After all configured trigger events are met, when the terminal triggers the report of successful PAC, the terminal determines that the RRC reconfiguration message carries the indication information of the location information. In case the terminal determines that there is available location information, the terminal records the available location information. The terminal sends the available location information to the network device.

Other details about blocks 801- 803 may refer to the description about the above embodiments, which are not elaborated in embodiments of the disclosure.

In conclusion, in the method for recording the location information for the report of successful PAC according to embodiments of the disclosure, the terminal may send the location information to the network device after recording the location information of the terminal. In embodiments of the disclosure, the network device may send the RRC reconfiguration message carrying the indication information of the location information to the terminal, and then receive the location information of the terminal sent by the terminal, to confirm whether the PAC successes. The network device may receive the location information of the terminal in different receiving ways. The disclosure provides a processing method for the situation where "recording the location information for successful PAC is not supported temporarily", to provide an additional confirmation opportunity and to ensure a success rate of the PAC.

FIG. 9 is a flow chart illustrating a method for recording location information for a report of successful PScell addition or change according to an embodiment of the disclosure. The method is performed by the network device. As illustrated in FIG. 9, the method may include the following.

At block 901, measurement configuration information is sent to a terminal, in which the measurement configuration information includes indication information for location measurement, and the indication information for location measurement includes at least one of: includeCommonLocationInfo, includeBT-Meas, includeWLAN-Meas, or includeSensor-Meas.

At block 1302, location information sent by the terminal is received.

Other details about blocks 901- 1302 may refer to the description about the above embodiments, which are not elaborated again in the embodiments of the disclosure.

In conclusion, in the method for recording the location information for the report of successful PAC according to embodiments of the disclosure, the terminal may send the location information to the network device after recording the location information of the terminal. In embodiments of the disclosure, the network device may send the measurement configuration information including the indication information for location measurement to the terminal, and then receive the location information of the terminal sent by the terminal, to confirm whether the PAC is successes. The network device may receive the location information of the terminal in different receiving ways. The disclosure provides a processing method for the situation where "recording the location information for successful PAC is not supported temporarily", to provide an additional confirmation opportunity and to ensure a success rate of the PAC.

FIG. 10 is a flow chart illustrating a method for recording location information for a report of successful PScell addition or change according to an embodiment of the disclosure. The method is performed by the network device. As illustrated in FIG. 10, the method may include the following.

At block 1001, an RRC reconfiguration message for the report of successful PAC is sent to a terminal, in which OtherConfig in the RRC reconfiguration message carries an obtainCommonLocation.

At block 1002, location information sent by the terminal is received.

Other details about blocks 1001- 1002 may refer to the description about the above embodiments, which are not elaborated again in the embodiments of the disclosure.

In conclusion, in the method for recording the location information for the report of successful PAC according to embodiments of the disclosure, the terminal may send the location information to the network device after recording the location information of the terminal. In embodiments of the disclosure, the network device may send the RRC reconfiguration message to the terminal, and then receive the location information of the terminal sent by the terminal, to confirm whether the PAC successes. The OtherConfig in the RRC reconfiguration message indicates the obtainCommonLocation. The network device may receive the location information of the terminal in different receiving ways. The disclosure provides a processing method for the situation where "recording the location information for successful PAC is not supported temporarily", to provide an additional confirmation opportunity and to ensure a success rate of the PAC.

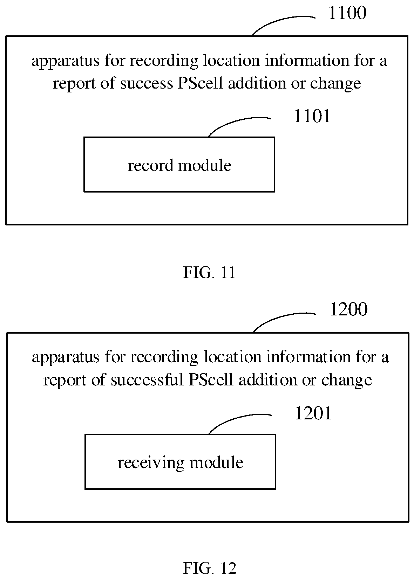

FIG. 11 is a block diagram illustrating an apparatus for recording location information for a report of successful PAC according to an embodiment of the disclosure. As illustrated in FIG. 11, the apparatus 1100 may include:
a record module 1101, configured to record location information of a terminal in response to triggering the report of successful PAC.

In conclusion, in embodiments of the disclosure, the terminal may record the location information of the terminal in response to triggering the report of successful PAC. In embodiments of the disclosure, the terminal records the location information of the terminal, thus recording the location information of the terminal when the report of successful PAC is determined, and further confirming successful PAC. The disclosure provides a processing method for a situation where "recording the location information for successful PAC is not supported temporarily", to provide an additional confirmation opportunity and to ensure a success rate of the PAC.

Alternatively, in an embodiment of the disclosure, the record module 1101 is further configured to:
record available location information in case there is the available location information in the terminal.

Alternatively, in an embodiment of the disclosure, the record module 1101 is further configured to:
receive a radio resource control (RRC) reconfiguration message sent by a network device for the report of successful PAC;
determine whether the RRC reconfiguration message carries indication information of the location information after triggering the report of successful PAC in response to the RRC reconfiguration message;
determine whether there is available location information in the terminal in response to the RRC reconfiguration message carrying the indication information of the location information; and
record the available location information in response to there being the available location information in the terminal.

Alternatively, in an embodiment of the disclosure, the record module 1101 is further configured to:
receive measurement configuration information sent by a network device; and
record the location information of the terminal in response to the measurement configuration information including indication information for location measurement, in which the indication information for location measurement includes at least one of: includeCommonLocationInfo, includeBT-Meas, includeWLAN-Meas, or includeSensor-Meas.

Alternatively, in an embodiment of the disclosure, the measurement configuration information is a reportConfigToAddModList in a MeasConfig.

Alternatively, in an embodiment of the disclosure, the record module 1101 is further configured to:
receive an RRC reconfiguration message sent by a network device; and
record the location information of the terminal in response to OtherConfig in the RRC reconfiguration message indicating an obtainCommonLocation.

Alternatively, in an embodiment of the disclosure, the record module 1101 is further configured to:
obtain global navigation satellite system (GNSS) location information in case there is no available GNSS location information in the terminal; and
record the GNSS location information as the location information of the terminal.

Alternatively, in an embodiment of the disclosure, the record module 1101 is further configured to:
in case the terminal obtains a user consent, obtain the location information of the terminal based on the user consent; and
record the location information of the terminal.

FIG. 12 is a block diagram illustrating an apparatus for recording location information for a report of successful PScell addition or change according to an embodiment of the disclosure. As illustrated in FIG. 12, the apparatus 120 may include:
a receiving module 1201, configured to receive location information sent by a terminal.

In conclusion, in the method for recording the location information for the report of successful PAC according to embodiments of the disclosure, the terminal may send the location information to the network device after recording the location information of the terminal. In embodiments of the disclosure, the network device may receive the location information of the terminal sent by the terminal, and confirm whether the PAC successes. The disclosure provides a processing method for the situation where "recording the location information for successful PAC is not supported temporarily", to provide an additional confirmation opportunity and to ensure a success rate of the PAC.

Alternatively, in an embodiment of the disclosure, the apparatus is further configured to:
obtain a user consent based on a user-defined feature (UDF) in a core network; and
send an radio resource control (RRC) reconfiguration message for the report of successful PAC to the terminal in response to the user consent, in which the RRC reconfiguration message carries indication information of the location information.

Alternatively, in an embodiment of the disclosure, the apparatus is further configured to:
send measurement configuration information to the terminal, in which the measurement configuration information includes indication information for location measurement, and the indication information for location measurement includes at least one of: includeCommonLocationInfo, includeBT-Meas, includeWLAN-Meas, or includeSensor-Meas.

Alternatively, in an embodiment of the disclosure, the apparatus is further configured to:
send an RRC reconfiguration message for the report of successful PAC to the terminal, in which OtherConfig in the RRC reconfiguration message carries an obtainCommonLocation.

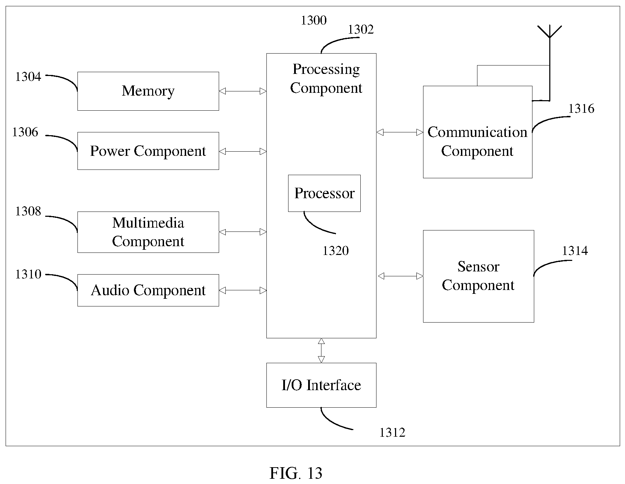

FIG. 13 is a block diagram illustrating a user equipment (UE) 1300 according to an embodiment of the disclosure. For example, the UE 1300 may be a mobile phone, a computer, a digital broadcasting terminal, a message sending and receiving device, a game controller, a tablet, a medical device, a fitness equipment, a personal digital assistant or the like.

Referring to FIG. 13, the UE 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the UE 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operation of the UE 1300. Examples of such data include instructions for any applications or methods operated on the UE 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the UE 1300. The power component 1306 may include a power management system, one or more power sources, and any other components associated with the generation, management, and distribution of power in the UE 1300.

The multimedia component 1308 includes a screen providing an output interface between the UE 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a waken-up period and a pressure associated with the touch or swipe action. In some embodiments, the multimedia component 1308 includes a front camera and/or a rear camera. The front camera and the rear camera may receive an external multimedia datum while the UE 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the UE 1300 is in an operation mode, such as a call mode, a recording mode, and a speech recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but be not limited to, a home button, a volume button, a starting button, and a locking button.

The sensor component 1314 includes one or more sensors to provide status assessments of various aspects of the UE 1300. For example, the sensor component 1314 may detect an open/closed status of the UE 1300, relative locationing of components, e.g., the display and the keypad, of the UE 1300, a change in location of the UE 1300 or a component of the UE 1300, a presence or absence of user contact with the UE 1300, an orientation or an acceleration/deceleration of the UE 1300, and a change in temperature of the UE 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the UE 1300 and other devices. The UE 1300 may access a wireless network based on a communication standard, such as Wi-Fi, 2G, or 3G, or a combination thereof. In an exemplary embodiment, the communication component 1316 receives a broadcast signal or broadcast related information from an external broadcast management system via a broadcast channel. In an exemplary embodiment, the communication component 1316 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the UE 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

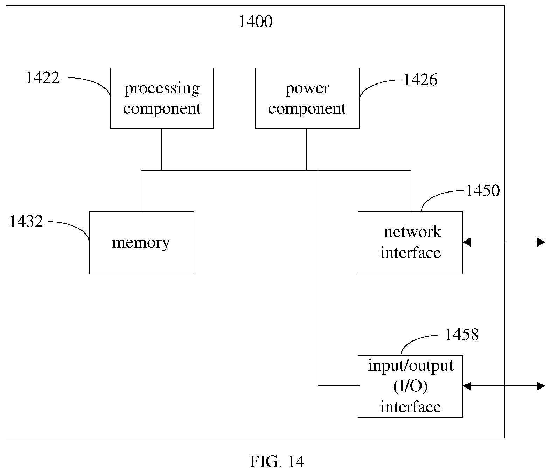

FIG. 14 is a block diagram illustrating a network device 1400 according to an embodiment of the disclosure. For example, the network device 1400 may be provided as a device in a network side. Referring to FIG. 14, the network device 1400 includes a processing component 1422 and a memory resource represented by a memory 1432. The processing component 1422 may further include one or more processors. The memory resource is configured to store instructions executable by the processing component 1422, such as an application. The application stored in the memory 1432 may include one or more modules each corresponding to a set of instructions. In addition, the processing component 1422 is configured to execute the instructions to execute any of the above methods in the network device, such as, the method illustrated in FIG. 1.

The network device 1400 also includes a power component 1426 configured to operate a power management of the network device 1400, a wired or wireless network interface 1450 configured to connect the network device 1400 to the network, and an input/output (I/O) interface 1458. The network device 400 may operate an operating system stored in the memory 1432, such as Windows Server TM, Mac OS XTM, Unix TM, Linux TM, Free BSDTM, or the like.

In the above embodiments according to the disclosure, the methods according to embodiments of the disclosure are introduced respectively from the perspectives of the network device and the UE. In order to realize each function in the method according to embodiments of the disclosure, the network device and the UE may include a hardware structure and a software module, and realize the above functions in the form of the hardware structure, the software module, or a combination of the hardware structure and the software module. One of the above functions may be executed in a way of the hardware structure, the software module, or a combination of the hardware structure and the software module.

In the above embodiments according to the disclosure, the methods according to embodiments of the disclosure are introduced respectively from the perspectives of the network device and the UE. In order to realize each function in the method according to embodiments of the disclosure, the network device and the UE may include the hardware structure and the software module, and realize the above functions in the form of the hardware structure, the software module, or the combination of the hardware structure and the software module. One of the above functions may be executed in the way of the hardware structure, the software module, or the combination of the hardware structure and the software module.

Embodiments of the disclosure provide a communication device. The communication device may include a receiving and sending module and a processing module. The receiving and sending module may include a sending module and/or a receiving module. The sending module is configured to realize a sending function, and the receiving module is configured to realize a receiving function. The receiving and sending module may realize the sending function and/or the receiving function.

The communication device may be a terminal (such as the terminal in the method embodiments), a device in the terminal, or a device that can be used in matching with the terminal. Alternatively, the communication device may be the network device, a device in the network device, or a device that can be used in matching with the network device.

Embodiments of the disclosure provide another communication device. The communication device may be the network device, the terminal (such as the terminal in the above method embodiments), or a chip, a chip system, a processor or the like that supports the network device to realize the above method, or a chip, a chip system, a processor or the like that supports the terminal to realize the above method. The communication device may be configured to realize the methods described in the above method embodiments. For details, please refer to the description in the above method embodiments.

The communication device may include one or more processors. The processor may be a general-purpose processor or a dedicated processor or the like, such as a baseband processor or a central processing processor. The baseband processor may be configured to process a communication protocol and communication data. The central processing processor may be configured to control the communication device (such as, a device in the network side, a baseband chip, a terminal, a terminal chip, a DU, or a CU), to execute a computer program, and to process data of the computer program.

Alternatively, the communication device may further include one or more memories having a computer program stored thereon. The processor is configured to execute the computer program, to enable the communication device to execute the method described in the above method embodiments. Alternatively, the memory may also store data. The communication device and the memory may be disposed separately or integrated together.

Alternatively, the communication device may further include a transceiver and an antenna. The transceiver may be referred to as a transceiver unit, a transceiver, a transceiver circuit or the like for realizing a receiving and sending function. The transceiver may include a receiver and a sender. The receiver may be referred to as a receiver or a receiving circuit, for realizing a receiving function. The sender may be referred to as a sender or a sending circuit for realizing a sending function.

Alternatively, the communication device may further include one or more interface circuits. The interface circuit is configured to receive code instructions and transmit the code instructions to the processor. The processor runs the code instructions to enable the communication device to execute the method described in the above method embodiments.

The communication device is the terminal (such as the terminal in the above method embodiments). The processor is configured to execute the method illustrated in any one of FIGs. 1-6.

The communication device is the network device. The processor is configured to execute the method illustrated in any one of FIGs. 7- 10.

In an implementation, the processor may include a transceiver for realizing the receiving and sending functions. For example, the transceiver may be a transceiver circuit, an interface, or an interface circuit. The transceiver circuit, the interface, or the interface circuit for realizing the receiving and sending functions may be separate or integrated together. The transceiver circuit, the interface, or the interface circuit may be configured to read and write codes/data, or the transceiver circuit, the interface, or the interface circuit may be configured to signal transmission or delivery.

In an implementation, the processor may store a computer program. The computer program running on the processor may cause the communication device to execute the method described in the above method embodiments. The computer program may be solidified in the processor. In this case, the processor may be implemented by hardware.

In an implementation, the communication device may include a circuit. The circuit may realize a function of sending, receiving or communicating in the above method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be the network device or the terminal (such as the terminal in the above method embodiments), but a scope of the communication device described in the disclosure is not limited thereto, and a structure of the communication device may not be limited. The communication device may be a standalone device or may be part of a larger device. For example, the communication device may be:
(1) a stand-alone IC, a chip, a chip system or a subsystem;
(2) a collection of ICs including one or more ICs, alternatively, the collection of ICs also including storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; or
(6) others.

The case where the communication device may be the chip or the chip system. The chip includes a processor and an interface. There may be one or more processors, and there may be more than one interface.

Alternatively, the chip further includes a memory. The memory is configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of the entire system. Those skilled in the art may, for each particular application, use various methods to execute the described function, but such implementation should not be understood as beyond the scope of protection of embodiments of the disclosure.

The disclosure further provides a readable storage medium having instructions stored thereon. When the instructions are executed by a computer, the functions according to any of the above method embodiments are realized.

The disclosure further provides a computer program product. When the computer program product is executed by a computer, the functions according to any of the above method embodiments are realized.

The above embodiments may be implemented in whole or in part by software, hardware, firmware, or any combination thereof. When implemented using software, the above embodiments may be implemented, in whole or in part, in the form of the computer program product. The computer program product includes one or more computer programs. When loading and executing the computer program in the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired way (e.g., using coaxial cables, fiber optics, or digital subscriber lines (DSLs) or wireless way (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that various numerical numbers such as the first, second, and the like involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, the term "first", "second", and "third", "A", "B", "C" and "D" and the like are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only is limited by the appended claims.

## Claims

1. A method for recording location information for a report of successful primary secondary cell (PScell) addition or change (PAC), performed by a terminal, comprising:
recording location information of the terminal in response to triggering the report of successful PAC.

2. The method of claim 1, wherein recording the location information of the terminal comprises:
recording available location information in case there is the available location information in the terminal.

3. The method of claim 1, wherein recording the location information of the terminal in response to triggering the report of successful PAC comprises:
receiving a radio resource control (RRC) reconfiguration message sent by a network device for the report of successful PAC;
determining whether the RRC reconfiguration message carries indication information of the location information, after triggering the report of successful PAC in response to the RRC reconfiguration message;
determining whether there is available location information in the terminal in response to the RRC reconfiguration message carrying the indication information of the location information; and
recording the available location information in response to there being the available location information in the terminal.

4. The method of claim 1, wherein recording the location information of the terminal comprises:
receiving measurement configuration information sent by a network device; and
recording the location information of the terminal in response to the measurement configuration information comprising indication information for location measurement, wherein the indication information for location measurement comprises at least one of: includeCommonLocationInfo, includeBT-Meas, includeWLAN-Meas, or includeSensor-Meas.

5. The method of claim 4, wherein the measurement configuration information is a reportConfigToAddModList in a MeasConfig.

6. The method of claim 1, wherein recording the location information of the terminal comprises:
receiving an RRC reconfiguration message sent by a network device; and
recording the location information of the terminal in response to OtherConfig in the RRC reconfiguration message indicating an obtainCommonLocation.

7. The method of claim 6, wherein recording the location information of the terminal comprises:
obtaining global navigation satellite system (GNSS) location information in case there is no available GNSS location information in the terminal; and
recording the GNSS location information as the location information of the terminal.

8. The method of claim 1, wherein recording the location information of the terminal comprises:
in case the terminal obtains a user consent, obtaining the location information of the terminal based on the user consent; and
recording the location information of the terminal.

9. A method for recording location information for a report of successful primary secondary cell (PScell) addition or change (PAC), performed by a network device, comprising:
receiving location information sent by a terminal.

10. The method of claim 9, before receiving the location information sent by the terminal, further comprising:
obtaining a user consent based on a user-defined feature (UDF) in a core network; and
sending a radio resource control (RRC) reconfiguration message for the report of successful PAC to the terminal in response to the user consent, wherein the RRC reconfiguration message carries indication information of the location information.

11. The method of claim 9, before receiving the location information sent by the terminal, further comprising:
sending measurement configuration information to the terminal, wherein the measurement configuration information comprises indication information for location measurement, and the indication information for location measurement comprises at least one of: includeCommonLocationInfo, includeBT-Meas, includeWLAN-Meas, or includeSensor-Meas.

12. The method of claim 9, before receiving the location information sent by the terminal, further comprising:
sending an RRC reconfiguration message for the report of successful PAC to the terminal, wherein OtherConfig in the RRC reconfiguration message carries an obtainCommonLocation.

13. An apparatus for recording location information for a report of successful primary secondary cell (PScell) addition or change (PAC), comprising:
a record module, configured to record location information of a terminal in response to triggering the report of successful PAC.

14. An apparatus for recording location information for a report of successful primary secondary cell (PScell) addition or change (PAC), comprising:
a receiving module, configured to receive location information sent by a terminal.

15. A communication device, comprising a processor and a memory for storing a computer program, wherein when the computer program is executed by the processor, the communication device is caused to implement the method according to any of claims 1 to 8.

16. A communication device, comprising a processor and a memory for storing a computer program, wherein when the computer program is executed by the processor, the communication device is caused to implement the method according to any of claims 9 to 12.

17. A communication device, comprising: a processor and an interface circuit, wherein
the interface circuit is configured to receive code instructions and to transmit the code instructions to the processor; and
the processor is configured to execute the code instructions, to execute the method according to any one of claims 1 to 8.

18. A communication device, comprising: a processor and an interface circuit, wherein
the interface circuit is configured to receive code instructions and to transmit the code instructions to the processor; and
the processor is configured to execute the code instructions, to execute the method according to any one of claims 9 to 12.

19. A computer-readable storage medium, configured to store instructions, wherein when the instructions are executed, the method according to any one of claims 1 to 8 is realized.

20. A computer-readable storage medium, configured to store instructions, wherein when the instructions are executed, the method according to any one of claims 9 to 12 is realized.
